# EUROPÄISCHE PATENTSCHRIFT

(11) **EP 1 275 022 B1**
(45) Veröffentlichungstag und Bekanntmachung des Hinweises auf die Patenterteilung: **18.06.2008**
(21) Anmeldenummer: 01938028.6
(22) Anmeldetag: 21.03.2001
(51) Int. Cl.: G02B 6/38

(54) **DUPLEXVERBINDER FÜR GLASFASERSTECKVERBINDER**
DUPLEX CONNECTORS FOR OPTICAL FIBRE PLUG CONNECTORS
CONNECTEURS DUPLEX POUR CONNECTEURS DE FIBRES OPTIQUES ENFICHABLES

(30) Priorität: 18.04.2000 DE 10019104
(43) Veröffentlichungstag der Anmeldung: 15.01.2003
(73) Patentinhaber: ADC GMBH, 14167 Berlin (DE)
(72) Erfinder: KAHLE, Eberhard, 12557 Berlin (DE); THALEMANN, Detlev, 12105 Berlin (DE)
(86) Internationale Anmeldenummer: PCT/EP2001/003233
(87) Internationale Veröffentlichungsnummer: WO 2001/079904

(56) Entgegenhaltungen:
- EP-A1- 0 729 048
- DE-U- 29 504 575
- US-A- 5 293 581
- US-A- 5 398 295
- US-A- 5 579 425
- US-B1- 6 250 817

## Beschreibung

Die Erfindung betrifft einen Duplex-Steckverbinder gemäß dem Oberbegriff des Anspruchs 1.

Ein derartiger Duplexverbinder ist aus der US-579,425 bekannt. Der Duplexverbinder umfasst ein plattenförmiges Element, an dessen Seitenwänden jeweils zwei unterschiedlich ausgebildete zylindrische Stifte angeordnet sind, die in korrespondierende Löcher in einem Steckergehäuse eines Simplexsteckers steckbar sind. Auf der Oberseite des plattenförmigen Elementes ist ein bügelförmiges Element angeordnet, das im zusammengesetzten Zustand die Rastbügel der Simplex-Steckverbinder umgreift, so dass durch Betätigung des bügelförmigen Elementes die beiden Rastbügel der Simplex-Steckverbinder simultan lösbar sind. Die Simplex-Steckverbinder sind an beiden Seiten ihres Gehäuses mit Löchern ausgebildet, so dass jeder Simplex-Steckverbinder an einer beliebigen Seite des Duplexverbinders anordenbar ist. Dadurch ist beispielsweise eine nachträgliche Vertauschung der Kanäle durch Austausch bzw. Wechsel der Simplex-Steckverbinder möglich. Mittels des Duplexverbinders lässt sich somit aus zwei Simplex-Steckverbindern ein Duplex-Steckverbinder herstellen. Ein weiterer Vorteil ist, dass bei Defekt eines Simplex-Steckverbinders nur dieser defekte Steckverbinder ausgetauscht werden muss. Nachteilig an dem bekannten Duplexverbinder ist die mangelnde Qualität der mechanischen Verbindung sowie deren beschränkte Verwendbarkeit.

Aus der US-5,398,295 A ist ein Duplex-Steckverbinder für Glasfaserverbinder bekannt, umfassend einen Duplexverbinder und zwei Simplex-Steckverbinder, wobei der Duplexverbinder durch zwei Gehäuseschalen gebildet wird, die im zusammengesetzten Zustand die Steckergehäuse der aufzunehmenden Simplex-Steckverbinder umschließen.

Aus der DE 295 04 575 U1 ist ebenfalls ein Duplex-Steckverbinder bekannt, wobei der Duplexverbinder einteilig ausgebildet ist.

Aus der EP 0 729 048 A1 ist ein Duplex-Steckverbinder bekannt, wobei die Stecker zum zugfesten Einrasten in einem Buchsenteil eine Einrastvorrichtung aufweisen, die mit einem Entriegelungshebel lösbar ist, wobei als Verbindungseinrichtung ein gemeinsamer Entriegelungshebel dient, der sich über beide Stecker erstreckt und der an jedem Stecker beweglich befestigt ist.

Aus der US-5,293,581 A ist ein Duplex-Steckverbinder bekannt, umfassend einen Duplexverbinder für Glasfaserverbinder und zwei Simplex-Steckverbinder, wobei jeder Simplex-Steckverbinder ein Steckergehäuse und einen Knickschutz umfasst, wobei der Duplexverbinder zwei Befestigungseinrichtungen zur Aufnahme zweier Simplex-Steckverbinder zur Bildung eines Duplex-Steckverbinders umfasst, wobei die Befestigungseinrichtungen derart ausgebildet sind, dass diese das Steckergehäuse und den Knickschutz der aufgenommenen Steckverbinder einschließen.

Der Erfindung liegt daher das technische Problem zugrunde, einen Duplex-Steckverbinder für Glasfasersteckverbinder zu schaffen, der universell einsetzbar ist und eine gute mechanische Verbindung zwischen Duplexverbinder und Steckverbinder sowie eine einfache Lösbarkeit realisiert.

Die Lösung des technischen Problems ergibt sich durch den Gegenstand mit den Merkmalen des Patentanspruchs 1. Weitere vorteilhafte Ausgestaltungen der Erfindung ergeben sich aus den Unteransprüchen. Hierzu umfasst der Duplex-Steckverbinder einen Duplexverbinder für Glasfaserverbinder und zwei Simplex-Steckverbinder, wobei jeder Simplex-Steckverbinder ein Steckergehäuse umfasst, wobei der Duplexverbinder zwei Befestigungseinrichtungen zur Aufnahme zweier Simplex-Steckverbinder zur Bildung eines Duplex-Steckverbinders umfasst, wobei die Befestigungseinrichtungen derart ausgebildet sind, dass diese das Steckergehäuse und/oder einen Knickschutz der aufgenommenen Steckverbinder mindestens teilweise umschließen. Dadurch wird der aufzunehmende Steckverbinder von der Befestigungseinrichtung festgeklemmt, wobei die Klemmkräfte sich entsprechend der Ausbildung der Befestigungseinrichtung um das bzw. die Steckergehäuse verteilen. Ein weiterer Vorteil des erfindungsgemäßen Duplexverbinders ist, dass dieser keinerlei mechanische Vorhaltungen am Steckverbinder selbst benötigt. Dadurch ist der Duplexverbinder universell für Steckverbinder verschiedener Hersteller verwendbar.

An dem Steckergehäuse des Simplex-Steckverbinders ist jeweils ein Schnapp-Bügel angeordnet, wobei sich der Schnapp-Bügel aus einem Rastbügel und einem Lösebügel zusammensetzt.

Auf der Oberseite des Duplexverbinders ist ein bügelförmiges Element so angeordnet, dass im befestigten Zustand der Simplex-Steckverbinder deren Bügel übergreift, so dass durch Betätigung des bügelförmigen Elementes die beiden Bügel der Simplex-Steckverbinder simultan betätigt werden.

In einer bevorzugten Ausführungsform sind die Befestigungseinrichtungen als C-förmige Aufnahmen ausgebildet, so dass diese den jeweiligen Knickschutz federnd festklemmen. Dabei sind die offenen Schenkel der C-förmigen Aufnahme vorzugsweise mit einer Fase ausgebildet, um das Einführen des Steckverbinders zu erleichtern.

In einer weiteren bevorzugten Ausführungsform schließt sich in Längsrichtung des Duplexverbinders an die C-förmige Aufnahme eine rechtwinklige Aufnahme an. Diese rechtwinklige Aufnahme dient zum Festklemmen eines Teils des Steckergehäuses. Somit wird der Steckverbinder gleichzeitig an dem Knickschutz und dem Steckergehäuse von dem Duplexverbinder festgeklemmt, was eine besonders feste mechanische Verbindung bewirkt.

Die rechtwinklige Aufnahme ist vorzugsweise im Wesentlichen L-förmig ausgebildet, wobei die offenen Schenkel vorzugsweise mit einer Fase ausgebildet sind. Weiter ist die L-förmige Aufnahme mit einem Steg ausgebildet, der über die Oberseite des Steckergehäuses ragt.

Die Erfindung wird nachfolgend anhand eines bevorzugten Ausführungsbeispiels näher erläutert. Die Fig. zeigen:
- Fig. 1: eine perspektivische Rückansicht eines Duplexverbinders,
- Fig. 2: eine perspektivische Vorderansicht des Duplexverbinders,
- Fig. 3: eine Seitenansicht des Duplexverbinders,
- Fig. 4: eine Explosionsdarstellung des Duplexverbinders mit zwei Simplex-Steckverbindern,
- Fig. 5: eine Duplex-Steckverbindung aus einem Duplexverbinder und zwei Simplex-Steckverbindern im zusammengesetzten Zustand und
- Fig. 6: eine Seitenansicht der Duplex-Steckverbindung.

Der Duplexverbinder 1 umfasst eine Oberseite 2 und eine Unterseite 3, zwischen denen mittig ein stegförmiges Wandelement 4 angeordnet ist. An jeder Seite des Wandelementes 4 ist eine C-förmige Aufnahme 5 und eine L-förmige Aufnahme 6 angeordnet. Die C-förmigen Aufnahmen 5 erstrecken sich über die volle Breite 3 des Duplexverbinders 1. Die Stirnseiten 7 der oberen Schenkel sind mit einer Fase 8 und die Stirnseiten 9 der unteren Schenkel sind mit einer Fase 10 ausgebildet. Die Stirnseite 9 des unteren Schenkels erstreckt sich über die volle Länge L des Duplexverbinders 1, wohingegen die Stirnseite 7 sich nur bis zur L-förmigen Aufnahme 6 erstreckt. Parallel zur Oberseite 2 des Duplexverbinders 1 ist im Bereich der L-förmigen Aufnahme 6 ein Steg 11 angeordnet, der etwas schmaler als die Breite B des Duplexverbinders 1 ist. Der Steg 11 ist ebenfalls mit einer Fase 12 ausgebildet. Die Länge der C-förmigen Aufnahme 5 ist dabei etwas mehr als doppelt so groß wie Länge der L-förmigen Aufnahme 6. An der Oberseite 2 ist ein bügelförmiges Element 13 angeordnet, das sich in einem Winkel von der Vorderseite zur Rückseite erstreckt und in einen zur Oberseite 2 parallelen Teil übergeht.

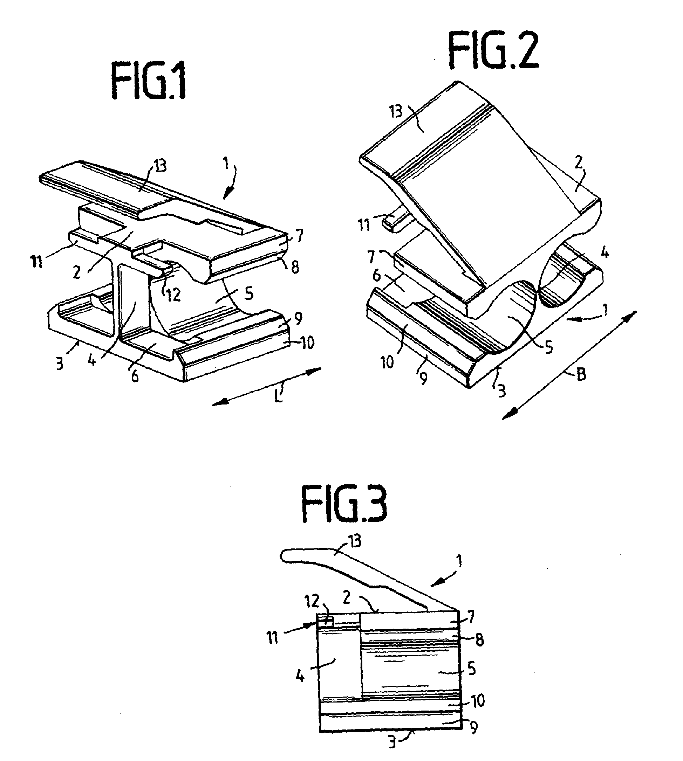

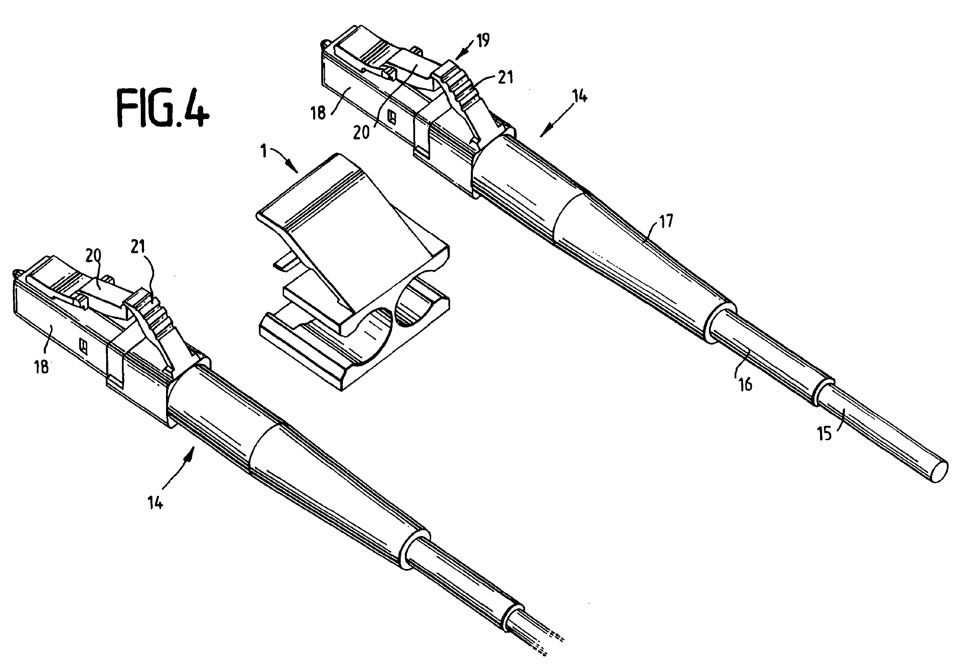

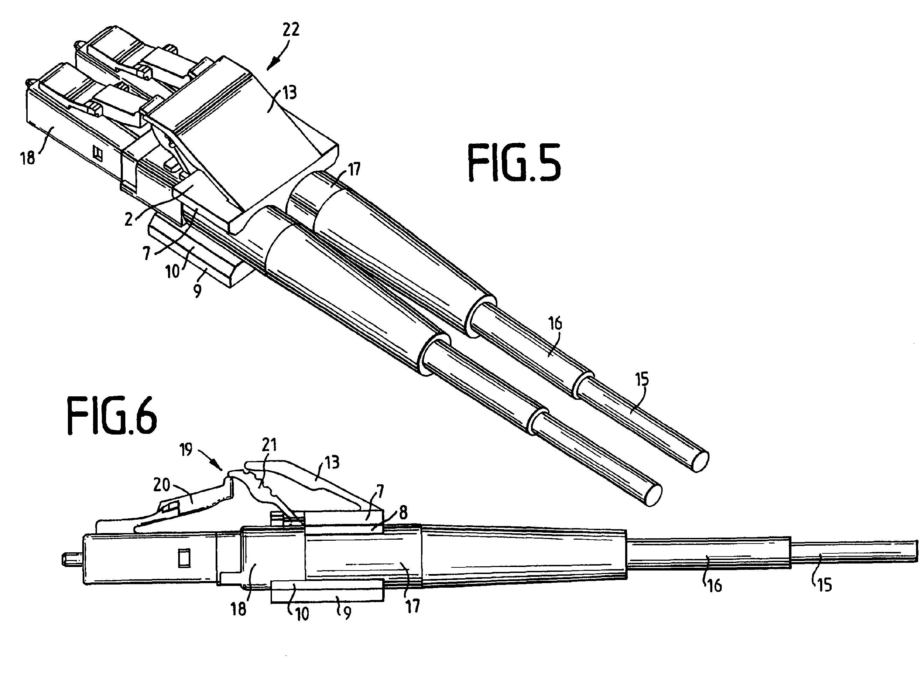

In der Fig. 4 ist der Duplexverbinder 1 aus den Fig. 1-3 mit zwei Simplex-Steckverbindem 14 dargestellt. Die beiden Simplex-Steckverbinder 14 sind vollkommen identisch aufgebaut. Jeder Simplex-Steckverbinder 14 umfasst das eigentliche Glasfaserkabel 15, eine Kabelmantelfixierung 16, einen Knickschutz 17 und das Steckergehäuse 18. Der Knickschutz 17 setzt sich zusammen aus einem konischen und einem zylindrischen Teil, wobei der zylindrische Teil dem Steckergehäuse 18 zugewandt ist. An dem Steckergehäuse 18 ist ein Schnapp-Bügel 19 angeordnet, der zum Verrasten und Lösen des Steckverbinders 14 in einer entsprechenden Aufnahme dient. Das Steckergehäuse 18 selbst ist im Westentlichen quaderförmig ausgebildet. Der Schnapp-Bügel 19 setzt sich aus einem Rastbügel 20 und einem Lösebügel 21 zusammen, was anhand Fig. 6 näher erläutert wird.

In der Fig. 5 ist der komplette Duplex-Steckverbinder 22 dargestellt. Dabei ist der zylindrische Teil des Knickschutzes 17 in der C-förmigen Aufnahme 5 und ein Teil des Steckergehäuses 18 in der L-förmigen Aufnahme 6 festgeklemmt. Durch das seitliche Umgreifen der Aufnahmen 5,6 durch die Stirnseiten 7,9 mit ihren Fasen 8,10 ist die Klemmverbindung mechanisch sehr stabil. Das bügelförmige Element 13 steht dabei über beiden Bügeln 19 der beiden Simplex-Steckverbinder 14, so dass diese simultan gelöst werden können.

Wie aus Fig. 6 ersichtlich, stehen die Lösebügel 21 über den Rastbügeln 20 und das bügelförmige Element 13 über den Lösebügeln 21. Wird nun der Duplex-Steckverbinder 22 in eine entsprechende Aufnahme gesteckt, so rasten die Rastbügel 20 in der Aufnahme ein. Durch Druck auf den schrägen Teil des bügelförmigen Elementes 13 werden die Lösebügel 21 ebenfalls nach unten gedrückt. Diese wiederum drücken die Rasthügel 20 nach unten, so dass alle Bügel entrastet werden und der Duplex-Steckverbinder 22 gelöst werden kann.

### Bezugszeichenliste

- 1): Duplexverbinder
- 2): Oberseite
- 3): Unterseite
- 4): Wandelement
- 5): C-förmige Aufnahme
- 6): L-förmige Aufnahme
- 7): Stirnseite des oberen Schenkels
- 8): Fase
- 9): Stirnseite des unteren Schenkels
- 10): Fase
- 11): Steg
- 12): Fase
- 13): bügelförmiges Element
- 14): Simplex-Steckverbinder
- 15): Glasfaserkabel
- 16): Kabelmantelfixierung
- 17): Knickschutz
- 18): Steckergehäuse
- 19): Schnapp-Bügel
- 20): Rastbügel
- 21): Lösebügel
- 22): Duplex-Steckverbinder

## Patentansprüche

1. Duplex-Steckverbinder, umfassend einen Duplexverbinder (1) für Glasfaserverbinder und zwei Simplex-Steckverbinder (14), wobei jeder Simplex-Steckverbinder (14) ein Steckergehäuse (18) umfasst, der Duplexverbinder (1) zwei Befestigungseinrichtungen zur Aufnahme zweier Simplex-Steckverbinder zur Bildung eines Duplex-Steckverbinders umfasst, wobei die Befestigungseinrichtungen derart ausgebildet sind, dass diese jeweils ein Steckergehäuse (18) und/oder einen Knickschutz (17) der aufgenommenen Steckverbinder (14) großenteils und klemmend umchließen, an dem Steckergehäuse (18) des Simplex-Steckverbinders (14) jeweils ein Schnapp-Bügel (19) angeordnet ist, wobei sich der Schnapp-Bügel (19) aus einem Rastbügel (20) und einem Lösebügel (21) zusammensetzt,
**dadurch gekennzeichnet, dass**
auf der Oberseite (2) des Duplexverbinders (1) ein bügelförmiges Element (13) angeordnet ist, das im befestigten Zustand der Simplex-Steckverbinder (14) deren Bügel (19) übergreift, so dass durch Betätigung des bügelförmigen Elements (13) die beiden Bügel (19) der Simplex-Steckverbinder (14) simultan betätigt werden.

2. Duplex-Steckverbinder nach Anspruch 1, **dadurch gekennzeichnet, dass** die Befestigungseinrichtungen als C-förmige Aufnahmen (5) ausgebildet sind.

3. Duplex-Steckverbinder nach Anspruch 2, **dadurch gekennzeichnet, dass** sich in Längsrichtung (L) an die C-förmige Aufnahme (5) eine rechtwinklige Aufnahme (6) zum Festklemmen eines Teils des Steckergehäuses (18) anschließt.

## Claims

1. Duplex plug-in connector, comprising a duplex connector (1) for optical fibre connectors and two simplex plug-in connectors (14), wherein each simplex plug-in connector (14) comprises a plug housing (18), and the duplex connector (1) comprises two fastening devices for receiving two simplex plug-in connectors so as to form a duplex plug-in connector, wherein the fastening devices are designed in such a way that they each enclose with clamping a large part of a plug housing (18) and/or a kink preventer (17) of the plug-in connectors (14), received, and a snap-in clip (19) is arranged on each plug housing (18) of the simplex plug-in connector (14), wherein the snap-in clip (19) is made up of a latching clip (20) and a releasing clip (21), **characterized in that** a clip-shaped element (13) is arranged on the upper side (2) of the duplex connector (1) and, with the simplex plug-in connectors (14) in the fastened state, engages over the clips (19) thereof such that actuation of the clip-shaped element (13) causes both clips (19) of the simplex plug-in connectors (14) to be actuated simultaneously.

2. Duplex plug-in connector according to Claim 1,
**characterized in that** the fastening devices are designed as C-shaped receivers (5).

3. Duplex plug-in connector according to Claim 2,
**characterized in that** a right-angled receiver (6) for securely clamping part of the plug housing (18) adjoins the C-shaped receiver (5) in the longitudinal direction (L).

## Revendications

1. Connecteur duplex enfichable, comprenant un connecteur duplex (1) pour des connecteurs de fibres optiques et deux connecteurs simplex enfichables (14), chaque connecteur simplex enfichable (14) comprenant un boîtier de connecteur (18), le connecteur duplex (1) comprenant deux dispositifs de fixation pour recevoir deux connecteurs simplex enfichables pour former un connecteur duplex enfichable, les dispositifs de fixation étant réalisés de telle sorte que ceux-ci entourent à chaque fois, pour la majeure partie et avec serrage, un boîtier de connecteur (18) et/ou un élément antitortillement (17) des connecteurs enfichables reçus (14), un arceau d'encliquetage (19) étant à chaque fois disposé sur le boîtier de connecteur (18) du connecteur enfichable simplex (14), l'arceau d'encliquetage (19) se composant d'une branche d'encliquetage (20) et d'une branche de desserrage (21),
**caractérisé en ce que**
sur le côté supérieur (2) du connecteur duplex (1) est disposé un élément en forme d'arceau (13) qui vient en prise par le dessus avec l'arceau (19) des connecteurs enfichables simplex (14) dans l'état fixé de ces derniers, de sorte que l'actionnement de l'élément en forme d'arceau (13) actionne simultanément les deux arceaux (19) des connecteurs simplex enfichables (14).

2. Connecteur duplex enfichable selon la revendication 1, **caractérisé en ce que** les dispositifs de fixation sont réalisés sous forme de logements en forme de C (5).

3. Connecteur duplex enfichable selon la revendication 2, **caractérisé en ce qu'**un logement (6) rectangulaire pour fixer fermement une partie du boîtier de connecteur (18) se raccorde dans la direction longitudinale (L) au logement (5) en forme de C.
